# EUROPEAN PATENT APPLICATION

(11) **EP 4 664 431 A1**
(43) Date of publication of application: **17.12.2025**
(21) Application number: 25181891.0
(22) Date of filing: 10.06.2025
(51) Int. Cl.: G08B 29/18, G08B 29/14, G08B 29/12

(54) **SYSTEM AND METHOD FOR CONTROLLING SENSORS ASSOCIATED WITH FIRE AND SMOKE ALARMS**

(30) Priority: 10.06.2024 US 202463658005 P
(71) Applicant: Kidde Fire Protection, LLC, Bradenton, FL 34202 (US)
(72) Inventor: The designation of the inventor has not yet been filed
(74) Representative: Dehns

(57) **Abstract**

Described herein is a system for controlling one or more sensors (106). The system comprises one or more mobile computing devices (102) in communication with one or more sensors (106) installed in an area of interest (AOI), and a database (108) storing geo-locations of the sensors (106), wherein individual ones of the mobile computing devices (102) are configured to allow selection of at least one of the sensors (106) among the one or more sensors (106) to be operated in a hush mode or a testing mode, retrieve the geo-location of the selected sensors (106) from the database (108), determine a distance between the selected sensors (106) and the corresponding mobile computing device (102), based on the retrieved geo-location of the selected sensors (106), detect if the determined distance is within a threshold distance, and in response to a positive detection, issue a control signal to the selected sensors (106) and operate the selected sensors (106) in the hush mode or the testing mode.

## Description

### BACKGROUND

Embodiments described herein relate to the field of fire alarm systems and more particularly, to a system and method for controlling operation and hushing of sensors associated with fire and smoke alarm systems. There are disclosed systems and methods for controlling sensors, and systems for controlling fire and smoke alarm units.

### SUMMARY

Described herein is a system for controlling one or more sensors. The system comprises one or more mobile computing devices in communication with one or more sensors installed in an area of interest (AOI), and a database storing geo-locations of the one or more sensors, wherein individual ones of the mobile computing devices are configured to allow selection of at least one of the sensors among the one or more sensors to be operated in a hush mode or a testing mode, retrieve the geo-location of the selected sensors from the database, determine a distance between the selected sensors and the corresponding mobile computing device, based on the retrieved geo-location of the selected sensors, detect if the determined distance is within a threshold distance, and in response to a positive detection, issue a control signal to the selected sensors and operate the selected sensors in the hush mode or the testing mode.

Optionally, in response to a negative detection or upon a non-detection, the one or more mobile computing devices are configured to disable operation of the selected sensors in the hush mode or the testing mode, generate an alert signal indicative of a request to move the corresponding mobile computing devices near the selected sensors, and monitor the distance between the selected sensors and the corresponding mobile computing devices at a predefined interval.

Optionally, the individual ones of the mobile computing devices are configured to allow an admin to configure one or more of the threshold distances, the geo-location of the one or more sensors, and a hush duration of the sensors in the hush mode or the testing mode.

Optionally, the one or more sensors are one or more of a smoke detector, a fire detector, an indoor air quality sensor, a gas sensor, a motion detector, a low battery alarm, an end of life alarm, and one or more alarms.

Optionally, the individual ones of the mobile computing devices are configured to compare the retrieved geo-location of the selected sensors with a real-time geo-location of the corresponding mobile computing device to determine the distance therebetween.

Optionally, during a commissioning stage of the one or more sensors at the AOI, a geo-location of the mobile computing device in proximity to or used for commissioning the one or more sensors is defined and stored as the geo-location of the corresponding sensors.

Optionally, the database is associated with a server that is in communication with the one or more mobile computing devices, wherein during a commissioning stage of the one or more sensors at the AOI, the one or more mobile computing devices are configured to receive details pertaining to the geo-locations of the one or more sensors and store the received details in the database of the server.

Optionally, the database is associated with the one or more mobile computing devices, wherein during a commissioning stage of the one or more sensors at the AOI, the one or more mobile computing devices are configured to receive and store details pertaining to the geo-locations of the one or more sensors.

Optionally, the one or more mobile computing devices are one or more of a mobile phone, a tablet, a laptop, and or a smart home device.

Also described herein is a system for controlling a fire and smoke alarm unit. The system comprises one or more sensors associated with the alarm unit installed in an area of interest (AOI), wherein the one or more sensors comprises one or more of a smoke detector, and a fire detector, and one or more mobile computing devices in communication with the one or more sensors, and a database storing geo-locations of the one or more sensors, wherein individual ones of the mobile computing devices are configured to allow selection of at least one of the sensors among the one or more sensors to be operated in a hush mode or a testing mode, retrieve the geo-location of the selected sensors from the database, determine a distance between the selected sensors and the corresponding mobile computing device, based on the retrieved geo-location of the selected sensors, detect if the determined distance is within a threshold distance, and in response to a positive detection, issue a control signal to the selected sensors and operate the selected sensors in the hush mode or the testing mode.

Optionally, in response to a negative detection or non-detection, the one or more mobile computing devices are configured to disable operation of the selected sensors in the hush mode or the testing mode, generate an alert signal indicative of a request to move the corresponding mobile computing devices near the selected sensors, and monitor the distance between the selected sensors and the corresponding mobile computing devices at a predefined interval.

Further described herein is a method for controlling one or more sensors. The method comprises the steps of storing, in a database, geo-locations of the one or more sensors installed in an area of interest (AOI), allowing, by a mobile computing device, selection of at least one of the sensors among the one or more sensors to be operated in a hush mode or a testing mode, retrieving, by the mobile computing device, the geo-location of the selected sensors from the database, determining, by the mobile computing device, a distance between the selected sensors and the corresponding mobile computing device, based on the retrieved geo-location of the selected sensors, detecting, by the mobile computing device, if the determined distance is within a threshold distance, and in response to a positive detection, issuing, by the mobile computing device, a control signal to the selected sensors and operate the selected sensors in the hush mode or the testing mode.

Optionally, in response to a negative detection or non-detection, the method comprises the steps of disabling the operation of the selected sensors in the hush mode or the testing mode, generating, by the mobile computing device, an alert signal indicative of a request to move the corresponding mobile computing devices near the selected sensors, and monitoring, by the mobile computing device, the distance between the selected sensors and the corresponding mobile computing devices at a predefined interval.

Optionally, during a commissioning stage of the one or more sensors at the AOI, the method comprises the steps of defining and storing a geo-location of the mobile computing device in proximity to or used for commissioning the one or more sensors as the geo-location of the corresponding sensors.

Optionally, the database is associated with a server that is in communication with the mobile computing device, wherein during a commissioning stage of the one or more sensors at the AOI, the method comprises the steps of receiving, by the mobile computing device, details pertaining to the geo-locations of the one or more sensors, and storing, by the mobile computing device, the received details in the database of the server.

Optionally, the database is associated with the mobile computing device, wherein during a commissioning stage of the one or more sensors at the AOI, the method comprises the steps of receiving and storing, by the mobile computing device, details pertaining to the geo-locations of the one or more sensors in the database.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the subject disclosure of this invention and are incorporated in and constitute a part of this specification. The drawings illustrate exemplary embodiments of the subject disclosure and, together with the description, serve to explain the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an exemplary network architecture of a system for controlling the operation and hushing of sensors associated with a fire and smoke alarm unit in accordance with one or more embodiments of the invention.
FIG. 1B illustrates an exemplary block diagram of the system of FIGs. 1A, in accordance with one or more embodiments of the invention
FIG. 2A illustrates exemplary steps involved in a method for controlling the operation and hushing of sensors associated with a fire and smoke alarm unit in accordance with one or more embodiments of the invention.
FIG. 2B illustrates an exemplary flow diagram depicting the hushing operation performed by the system of FIG. 1A in accordance with one or more embodiments of the invention

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the subject disclosure as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention described herein may be positioned in any desired orientation. Thus, the use of terms such as "above," "below," "upper," "lower," "first," "second" or other like terms to describe a spatial relationship between various components or to describe the spatial orientation of aspects of such components should be understood to describe a relative relationship between the components or a spatial orientation of aspects of such components.

Smoke alarms are devices for home safety, providing early warnings of any fire hazards. Recent advancements have sought to improve their functionality by integrating features that allow users to temporarily silence or "hush" the alarm in non-emergency situations, such as smoke from cooking.

To comply with the requirements of various jurisdictions, a smoke alarm may only be hushed when the user is in close proximity to the device. This proximity condition ensures that the user is physically present and able to assess the situation. Earlier, proximity has been determined using several methods. One method involves point-to-point communication between the smoke alarm and a mobile application, where the user's device communicates directly with the alarm. Another approach requires both the smoke alarm and the mobile application to be connected to the same Wi-Fi network, indicating that the user is likely within the vicinity. Additionally, some systems require the user to manually input the location of the smoke alarm within the home into the mobile application, which helps establish the user's presence near the device. However, these methods may have limitations in terms of robustness, ease of use, and reliability.

Point-to-point communication may be hindered by signal interference or the need for constant pairing, making it an unreliable method for ensuring proximity. The requirement for the smoke alarm and the mobile application to share the same Wi-Fi network may be problematic in large homes with multiple networks or in situations where network connectivity is unstable. Manually inputting the location of the device into the mobile application may not only be cumbersome but may also be prone to user error, reducing the overall effectiveness of the proximity requirement.

These limitations have constrained the adoption of smoke alarm hushing features, highlighting the need for a more robust, user-friendly, and reliable solution. The present invention aims to address these issues by providing an improved system and method for determining user proximity, thereby enhancing the usability and effectiveness of smoke alarm hushing functionalities.

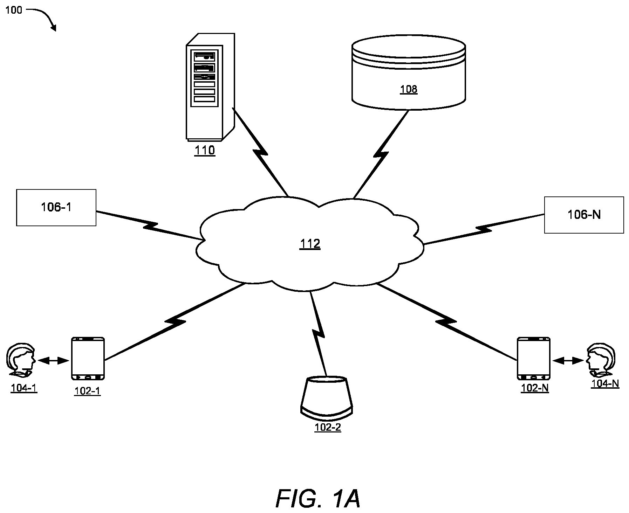

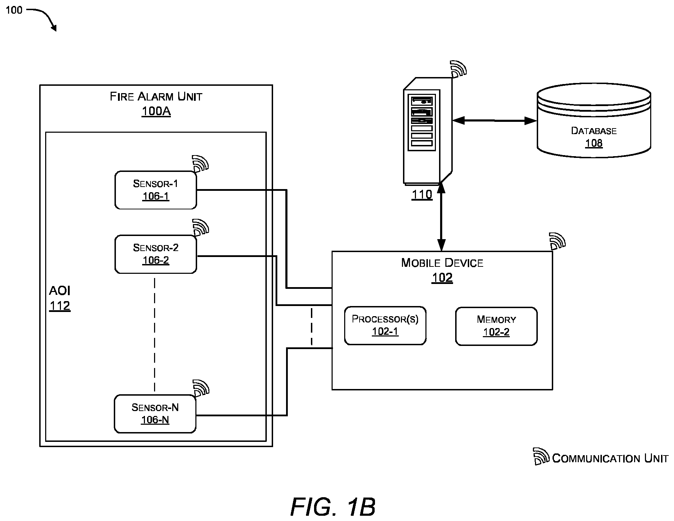

Referring to FIGs. 1A and 1B, a system 100 for controlling the operation and hushing of sensors 106 associated with a fire and smoke alarm unit 100A is disclosed. The system 100 may include one or more mobile computing devices 102-1 to 102-N (collectively designated as 102, herein) associated with one or more registered users 104-1 to 104-N (collectively designated as 104, herein). The mobile computing devices 102 may be in further communication with one or more sensors 106-1 to 106-N (collectively designated as 106, herein) associated with the fire and smoke alarm unit 100A via a network 112, where the communication may be established when the sensors 106 are within a network coverage area of the mobile computing devices 102. The fire and alarm unit 100A and the corresponding sensors 106 may be installed or commissioned at predefined locations in an area of interest (AOI) 114 including but not limited to a building, an open premise, and a commercial vehicle such as ships, aircraft, submarines, and trains. In one or more embodiments, the sensors 106 may be one or more of a smoke detector, a fire detector, an indoor air quality sensor, a gas sensor, and a motion detector, but are not limited to the like. Further, the users 104 may be occupants of the AOI, and/or an admin or registered operator associated with the fire and alarm unit.

It is to be appreciated that the implementation of the system 100 for controlling the operation and hushing of the smoke detector and fire detector mentioned herein are only exemplary, and these can be any other type of sensors as well without any limitation whatsoever, and all such implementations are well within the scope of the subject disclosure.

The system 100 may further include a database 108 in communication with the mobile computing devices 102 via the network 112. The database 108 may be provided with and configured to store geo-locations, types, and specifications of the sensors 106 being installed or commissioned at the predefined locations in the AOI 114. The mobile computing devices 102 may allow an admin or registered operators 104 associated with the fire and alarm unit 100A configured to enter and store details pertaining to the geo-locations, type, and specifications of the sensors 106 in the database 108 during and/or after the commissioning of the sensors 106 at the AOI 114. In one or more embodiments, the geo-location may be indicative of latitude and longitude coordinates, however, in other embodiments, the geo-location may be indicative of latitude and longitude coordinates, along with elevation or height from a reference plane.

The occupants, admin, and/or registered operators 104 may access the system 100 through a mobile application or web application residing on their mobile computing devices 102 or through a website. In one or more embodiments, the mobile computing devices 102 may be a desktop, smartphone, tablet, laptop, hand-held computing devices, and the like. Further, in some embodiments, the mobile computing devices 102 may be a smart home device installed in the AOI 114, which may be in communication with the sensors 106 and the database 108 via the network 112. For instance, as shown in FIG. 1A, a smart home device 102-2 may be connected to the database 108 and sensors 106. Further, other mobile phones 102-1, 102-N may also be connected to the database 108 and sensors 106.

The term "Smart home device" herein refers to a category of electronic devices designed for use in a home that may be controlled remotely via the internet, usually through a smartphone, tablet, or a voice-activated assistant. These devices are equipped with sensors 106, a GPS module, an internet-based assisted-GPS feature, software, and connectivity features that enable them to interact with other devices and systems 100 in the home and capture location information, providing users with enhanced convenience, security, energy efficiency, and location capturing capability. Examples of smart home devices include smart thermostats, smart lighting systems, smart speakers, smart security cameras, smart locks, and smart appliances. These devices may integrate with platforms like Amazon Alexa, Google Assistant, or Apple HomeKit, allowing the users to control and automate their home environment through voice commands, mobile apps, or scheduled routines.

In one or more embodiments, the mobile computing devices 102 may allow the users 104 to select the sensors 106 of the fire and alarm unit 100A to be operated in a hush mode or a testing mode. Once the sensor(s) 106 is selected for hush mode or testing mode, the corresponding mobile computing device 102 may request permission from the user to access the location. Upon getting permission from the user, the mobile computing device 102 may detect its current geo-location using a GPS module and further retrieve the geo-location of the selected sensors 106 from the database 108. Further, the mobile computing device 102 may determine its distance from the selected sensors 106, based on the retrieved geo-location of the selected sensors 106 and the current geo-location of the mobile computing device 102. Accordingly, if the determined distance is detected to be within a threshold distance, the mobile computing devices 102 may issue a control signal to the selected sensors 106 and operate the selected sensors 106 in the hush mode or the testing mode. However, if the determined distance is detected to be outside the threshold distance or upon a non-detection (in case the calculation is pending or an error is detected), the mobile computing devices 102 may restrict or disable the operation of the selected sensors 106 in the hush mode or the testing mode, and further generate an alert signal indicative of a request to move the corresponding mobile computing devices 102 near the selected sensors 106 while monitoring the distance between the selected sensors 106 and the corresponding mobile computing devices 102 at a predefined interval.

In one or more embodiments, during a commissioning stage of the sensors 106 or fire and alarm unit at the AOI 114, the geo-location of the mobile computing device 102 in proximity to or used for commissioning these sensors 106 may be defined and stored as the geo-location of the corresponding sensors 106 in the database 108. In such embodiments, the admin or registered operators 104 associated with the fire and alarm unit 100A may position or carry their mobile computing device 102 near the installed sensors 106, where the mobile computing device 102 may detect or consider its current geo-location as the geo-location of the corresponding sensors 106 and further store the detected geo-location of the corresponding sensors 106 in the database 108. Later, when the location of any of the sensors 106 is changed at the AOI 114, the admin or registered operators 104 may carry their mobile computing device 102 near the updated location of the sensor 106, where the mobile computing device 102 may detect or consider its current geo-location as the updated geo-location of the sensor 106 and further store the updated geo-location of the corresponding sensors 106 in the database 108. However, in other embodiments, the admin or registered operators 104 may manually enter and/or update the geo-location of the sensors 106 in their mobile computing devices 102, where the mobile computing devices 102 may further transmit and store the geo-location in the database 108.

Further, in one or more embodiments, the mobile computing devices 102 may be configured to allow the admin or registered operator 104 to configure one or more of the threshold distances for enabling or disabling the hush mode or the testing mode, and a hush duration and sensitivity of the sensors 106 during the hush mode or the testing mode. The "threshold distance" referred to herein may be the minimum distance between the mobile computing device 102 and the sensor 106, within which the hush mode or testing mode of the sensors 106 may be activated and beyond which the hush mode or testing mode of the sensors 106 may not be executed. Furthermore, the "hush duration" referred to herein may be the time duration from the initiation of the hush mode or testing mode, beyond which the hush mode or testing mode of the sensors 106 may end.

In a non-limiting example, the threshold distance between the mobile computing device 102 and a smoke detector or a fire detector may be 130 feet (that may be updated) (40 meters). Accordingly, if the distance between the mobile computing device 102 and the smoke detector/fire detector is detected to be within 130 feet (40 meters), the mobile computing devices 102 may issue a control signal to the selected sensors 106 and operate the selected smoke detector/fire detector in the hush mode or the testing mode. However, if the distance between the mobile computing device 102 and the smoke detector/fire detector is detected to be more than 130 feet (40 meters), or upon the non-detection (in case the calculation is pending or an error is detected), the mobile computing devices 102 may disable operation of the selected smoke detector/fire detector in the hush mode or the testing mode, generate an alert signal indicative of a request to move the corresponding mobile computing devices 102 within 130 feet (40 meters) from the selected smoke detector/fire detector and keep monitoring the distance between the selected smoke detector/fire detector and the corresponding mobile computing devices 102 at the predefined interval.

In one or more embodiments, the database 108 may be associated with a cloud-based server 110 that may be in communication with the mobile computing devices 102 via the network 112 as shown in FIGs. 1A and 1B. However, in other embodiments (not shown), the database 108 may also be associated with or an integral part of the mobile computing devices 102, where each mobile computing device 102 may be in communication with each other via the network 112 to communicate and exchange geo-location and sensor 106 data therebetween.

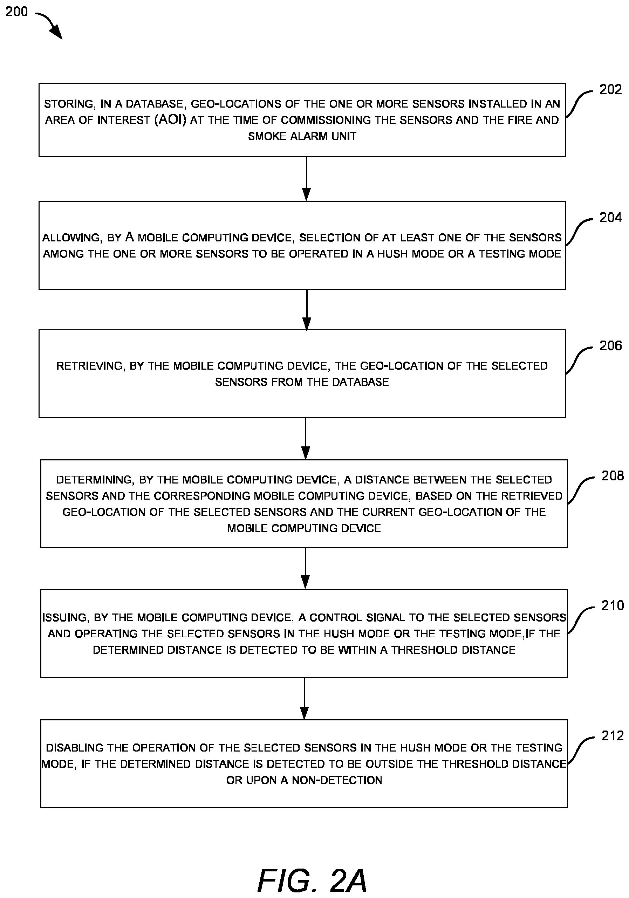

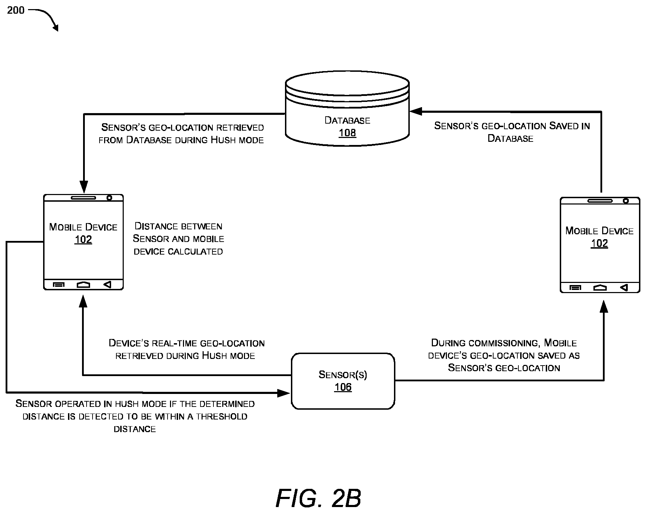

Referring to FIG. 2A, method 200 for controlling the operation and hushing of sensors associated with a fire and smoke alarm unit is disclosed. Further, referring to FIG. 2B, a flow diagram depicting the hushing operation performed by the system of FIG. 1A. Method 200 may involve the mobile computing devices 102, the sensors 106, the database 108, and the server 110 associated with the system 100 of FIGs. 1A and 1B.

Referring to FIGs. 2A and 2B, a method 200 may include step 202 of storing, in the database, geo-locations of the one or more sensors installed in an area of interest (AOI) at the time of commissioning the sensors and the fire and smoke alarm unit. Method 200 may further include step 204 of allowing, by the mobile computing device, selection of at least one of the sensors among the one or more sensors to be operated in a hush mode or a testing mode. Further, once the sensors to be operated in the hush mode or testing mode are selected, method 200 may include step 206 of retrieving, by the mobile computing device, the geo-location of the selected sensors from the database, followed by another step 208 of determining, by the mobile computing device, a distance between the selected sensors and the corresponding mobile computing device, based on the retrieved geo-location of the selected sensors and the current geo-location of the mobile computing device.

In one or more embodiments, at steps 206 and 208, once the sensor(s) is selected for hush mode or testing mode, the corresponding mobile computing device may request permission from the user to access the location. Upon getting permission from the user, the mobile computing device may detect its current geo-location using a GPS module and further retrieve the geo-location of the selected sensors from the database. Further, the mobile computing device may determine its distance from the selected sensors, based on the retrieved geo-location of the selected sensors and the current geo-location of the mobile computing device.

Accordingly, if the determined distance is detected to be within a threshold distance, method 200 may include step 210 of issuing, by the mobile computing device, a control signal to the selected sensors and operating the selected sensors in the hush mode or the testing mode. However, if the determined distance is detected to be outside the threshold distance or upon a non-detection (in case the calculation is pending or an error is detected), method 200 may include step 212 of disabling the operation of the selected sensors in the hush mode or the testing mode. Further, in one or more embodiments, at step 210, method 200 may include the steps of generating an alert signal indicative of a request to move the corresponding mobile computing devices near the selected sensors, followed by monitoring the distance between the selected sensors and the corresponding mobile computing devices at a predefined interval.

In one or more embodiments, the database may be associated with a server that may be in communication with the mobile computing device. In such embodiments, during the commissioning stage of the sensors at the AOI, method 200 may include the steps of receiving, by the mobile computing device, details pertaining to the geo-locations, types, and specifications of the sensors, followed by storing the received details in the database of the server.

In other embodiments, the database may be associated with the mobile computing device. In such embodiments, during the commissioning stage of the sensors at the AOI, method 200 may include the steps of receiving and storing, by the mobile computing device, details pertaining to the geo-locations, types, and specifications of the one or more sensors in its database.

Thus, this invention (system and method) addresses the limitations associated with existing solutions employed for enabling smoke alarm hushing features, by providing a more robust, user-friendly, and reliable solution for determining user proximity with the sensors using the geo-location tracking capability of the mobile computing device itself, thereby enhancing the usability and effectiveness of hushing functionalities in the sensors. This invention achieves proximity detection and smoke alarm hushing capability without the need for any point-to-point communication between the smoke alarm and the mobile computing device, to keep the smoke alarm and the mobile computing device connected to the same Wi-Fi network, or to manually input the location of the smoke alarm in the mobile computing device.

Although the invention has been explained considering that the system 100 and method 200 are implemented by a mobile application installed in a mobile phone of the users, it may be understood that the system 100 and method 200 may also be implemented in a variety of computing systems, such as a laptop computer, a desktop computer, a notebook, a workstation, a server, a network server, a cloud-based environment, a smart home device, and the like. The mobile computing device 102 comprises one or more processor(s) 102-1 operatively coupled to a memory 102-2 as shown in FIG. 2. The processors 102-1 may be implemented as one or more microprocessors, microcomputers, microcontrollers, digital signal processors, central processing units, logic circuitries, and/or any devices that manipulate data based on operational instructions. Among other capabilities, the processors 102-1 are configured to fetch and execute computer-readable instructions stored in the memory 102-2. The memory 102-2 may store one or more computer-readable instructions or routines, which may be fetched and executed to create or share the data units over a network service. The memory 102-2 may comprise any non-transitory storage device including, for example, volatile memory such as RAM, or non-volatile memory such as EPROM, flash memory, and the like.

The mobile computing device 102, the sensors 106, the database 108, and the server 110 comprise an interface(s) that may comprise a variety of interfaces, for example, a communication unit as shown in FIG. 1B for establishing a communication channel between the corresponding components. The communication unit may be a transceiver, or a cellular connection module such as 2G, 3G, 4G, and 5G, and the like to facilitate communication of the mobile computing device 102 with the sensors 106, the database 108, and the server 110, through the network 112. The interface(s) may also provide a communication pathway for one or more internal components or units of the mobile computing device 102, the sensors 106, the database 108, and the server 110.

"Commissioning stage of sensors" described herein refers to a process of ensuring that the sensors are correctly installed, calibrated, configured, and functioning as intended within the system at the AOI. This involves physically installing the sensors in the designated locations, ensuring proper mounting and positioning, and adjusting the sensors to deliver accurate measurements through calibration. This further involves using a mobile app or web application to interact with the sensors, configuring it by sending the Wi-Fi credentials so that the sensors may communicate wirelessly with the cloud and mobile computing devices, thereby ensuring that the sensors are correctly installed, calibrated, and integrated into the system, enabling it to transmit accurate and reliable data for further processing and analysis. Additionally, commissioning may include setting up sensor parameters such as range, resolution, and communication settings, followed by testing to verify correct operation under various conditions.

While the invention has been described with reference to exemplary embodiments, it will be understood by those skilled in the art that various changes may be made and equivalents may be substituted for elements thereof without departing from the scope of the invention as defined by the appended claims. Modifications may be made to adapt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C .... and N, the text should be interpreted as requiring only one element from the group, not A plus N, or B plus N, etc.

The following clauses set out features of the invention which may or may not presently be claimed in this application, but which may form the basis for future amendment or a divisional application.
1. A system for controlling one or more sensors, the system comprising: one or more mobile computing devices in communication with one or more sensors installed in an area of interest (AOI), and a database storing geo-locations of the one or more sensors, wherein individual ones of the mobile computing devices are configured to: allow selection of at least one of the sensors among the one or more sensors to be operated in a hush mode or a testing mode; retrieve the geo-location of the selected sensors from the database; determine a distance between the selected sensors and the corresponding mobile computing device, based on the retrieved geo-location of the selected sensors; detect if the determined distance is within a threshold distance; and in response to a positive detection, issue a control signal to the selected sensors and operate the selected sensors in the hush mode or the testing mode.
2. The system of clause 1, wherein in response to a negative detection or upon a non-detection, the one or more mobile computing devices are configured to: disable operation of the selected sensors in the hush mode or the testing mode; generate an alert signal indicative of a request to move the corresponding mobile computing devices near the selected sensors; and monitor the distance between the selected sensors and the corresponding mobile computing devices at a predefined interval.
3. The system of clause 1, wherein the individual ones of the mobile computing devices are configured to allow an admin to configure one or more of the threshold distance, the geo-location of the one or more sensors, and a hush duration of the sensors in the hush mode or the testing mode.
4. The system of clause 1, wherein the one or more sensors are one or more of a smoke detector, a fire detector, an indoor-air quality sensor, a gas sensor, a motion detector, a low battery alarm, an end of life alarm, and one or more alarms.
5. The system of clause 1, wherein the individual ones of the mobile computing devices are configured to compare the retrieved geo-location of the selected sensors with a real-time geo-location of the corresponding mobile computing device to determine the distance therebetween.
6. The system of clause 1, wherein during a commissioning stage of the one or more sensors at the AOI, a geo-location of the mobile computing device in proximity to or used for commissioning the one or more sensors is defined and stored as the geo-location of the corresponding sensors.
7. The system of clause 1, wherein the database is associated with a server that is in communication with the one or more mobile computing devices, wherein during a commissioning stage of the one or more sensors at the AOI, the one or more mobile computing devices are configured to receive details pertaining to the geo-locations of the one or more sensors and store the received details in the database of the server.
8. The system of clause 1, wherein the database is associated with the one or more mobile computing devices, wherein during a commissioning stage of the one or more sensors at the AOI, the one or more mobile computing devices are configured to receive and store details pertaining to the geo-locations of the one or more sensors.
9. The system of clause 1, wherein the one or more mobile computing devices are one or more of a mobile phone, a tablet, a laptop, and a smart home device.
10. A system for controlling a fire and smoke alarm unit, the system comprising: one or more sensors associated with the alarm unit installed in an area of interest (AOI), wherein the one or more sensors comprises one or more of a smoke detector, and a fire detector; and one or more mobile computing devices in communication with the one or more sensors, and a database storing geo-locations of the one or more sensors, wherein individual ones of the mobile computing devices are configured to: allow selection of at least one of the sensors among the one or more sensors to be operated in a hush mode or a testing mode; retrieve the geo-location of the selected sensors from the database; determine a distance between the selected sensors and the corresponding mobile computing device, based on the retrieved geo-location of the selected sensors; detect if the determined distance is within a threshold distance; and in response to a positive detection, issue a control signal to the selected sensors and operate the selected sensors in the hush mode or the testing mode.
11. The system of clause 10, wherein in response to a negative detection or non-detection, the one or more mobile computing devices are configured to: disable operation of the selected sensors in the hush mode or the testing mode; generate an alert signal indicative of a request to move the corresponding mobile computing devices near the selected sensors; and monitor the distance between the selected sensors and the corresponding mobile computing devices at a predefined interval.
12. The system of clause 10, wherein the one or more mobile computing devices are configured to allow an admin to configure one or more of the threshold distance, the geo-location of the one or more sensors, and a hush duration of the sensors in the hush mode or the testing mode.
13. The system of clause 10, wherein during a commissioning stage of the one or more sensors at the AOI, a geo-location of the mobile computing device in proximity to or used for commissioning the one or more sensors is defined and stored as the geo-location of the corresponding sensors.
14. The system of clause 10, wherein the database is associated with a server that is in communication with the one or more mobile computing devices, wherein during a commissioning stage of the one or more sensors at the AOI, the one or more mobile computing devices are configured to receive details pertaining to the geo-locations of the one or more sensors and store the received details in the database of the server.
15. The system of clause 10, wherein the database is associated with the one or more mobile computing devices, wherein during a commissioning stage of the one or more sensors at the AOI, the one or more mobile computing devices are configured to receive and store details pertaining to the geo-locations of the one or more sensors.
16. A method for controlling one or more sensors, the method comprising the steps of: storing, in a database, geo-locations of the one or more sensors installed in an area of interest (AOI); allowing, by a mobile computing device, selection of at least one of the sensors among the one or more sensors to be operated in a hush mode or a testing mode; retrieving, by the mobile computing device, the geo-location of the selected sensors from the database; determining, by the mobile computing device, a distance between the selected sensors and the corresponding mobile computing device, based on the retrieved geo-location of the selected sensors; detecting, by the mobile computing device, if the determined distance is within a threshold distance; and in response to a positive detection, issuing, by the mobile computing device, a control signal to the selected sensors and operate the selected sensors in the hush mode or the testing mode.
17. The method of clause 16, wherein in response to a negative detection or non-detection, the method comprises the steps of: disabling operation of the selected sensors in the hush mode or the testing mode; generating, by the mobile computing device, an alert signal indicative of a request to move the corresponding mobile computing devices near the selected sensors; and monitoring, by the mobile computing device, the distance between the selected sensors and the corresponding mobile computing devices at a predefined interval.
18. The method of clause 16, wherein during a commissioning stage of the one or more sensors at the AOI, the method comprises the steps of defining and storing a geo-location of the mobile computing device in proximity to or used for commissioning the one or more sensors as the geo-location of the corresponding sensors.
19. The method of clause 16, wherein the database is associated with a server that is in communication with the mobile computing device, wherein during a commissioning stage of the one or more sensors at the AOI, the method comprises the steps of: receiving, by the mobile computing device, details pertaining to the geo-locations of the one or more sensors; and storing, by the mobile computing device, the received details in the database of the server.
20. The method of clause 16, wherein the database is associated with the mobile computing device, wherein during a commissioning stage of the one or more sensors at the AOI, the method comprises the steps of receiving and storing, by the mobile computing device, details pertaining to the geo-locations of the one or more sensors in the database.

## Claims

1. A system for controlling one or more sensors, the system comprising:
one or more mobile computing devices (102) in communication with one or more sensors (106) installed in an area of interest (AOI), and a database (108) storing geo-locations of the one or more sensors (106), wherein individual ones of the mobile computing devices (102) are configured to:
allow selection of at least one of the sensors (106) among the one or more sensors to be operated in a hush mode or a testing mode;
retrieve the geo-location of the selected sensors from the database (108);
determine a distance between the selected sensors (106) and the corresponding mobile computing device (102), based on the retrieved geo-location of the selected sensors;
detect if the determined distance is within a threshold distance; and
in response to a positive detection, issue a control signal to the selected sensors (106) and operate the selected sensors in the hush mode or the testing mode.

2. The system of claim 1, wherein in response to a negative detection or upon a non-detection, the one or more mobile computing devices (102) are configured to:
disable operation of the selected sensors (106) in the hush mode or the testing mode;
generate an alert signal indicative of a request to move the corresponding mobile computing devices (102) near the selected sensors (106); and
monitor the distance between the selected sensors (106) and the corresponding mobile computing devices (102) at a predefined interval.

3. The system of claim 1 or 2, wherein the individual ones of the mobile computing devices (102) are configured to allow an admin to configure one or more of the threshold distance, the geo-location of the one or more sensors (106), and a hush duration of the sensors in the hush mode or the testing mode.

4. The system of any preceding claim, wherein the individual ones of the mobile computing devices (102) are configured to compare the retrieved geo-location of the selected sensors (106) with a real-time geo-location of the corresponding mobile computing device (102) to determine the distance therebetween.

5. The system of any preceding claim, wherein during a commissioning stage of the one or more sensors (106) at the AOI, a geo-location of the mobile computing device (102) in proximity to or used for commissioning the one or more sensors (106) is defined and stored as the geo-location of the corresponding sensors.

6. The system of any preceding claim, wherein the database (108) is associated with a server (110) that is in communication with the one or more mobile computing devices (102), wherein during a commissioning stage of the one or more sensors (106) at the AOI, the one or more mobile computing devices (102) are configured to receive details pertaining to the geo-locations of the one or more sensors (106) and store the received details in the database (108) of the server (110).

7. The system of any of claims 1 to 5, wherein the database (108) is associated with the one or more mobile computing devices (102), wherein during a commissioning stage of the one or more sensors (106) at the AOI, the one or more mobile computing devices (102) are configured to receive and store details pertaining to the geo-locations of the one or more sensors (106).

8. The system of any preceding claim, wherein the one or more mobile computing devices (102) are one or more of a mobile phone, a tablet, a laptop, and a smart home device.

9. The system of any preceding claim, wherein the one or more sensors (106) are one or more of a smoke detector, a fire detector, an indoor-air quality sensor, a gas sensor, a motion detector, a low battery alarm, an end of life alarm, and one or more alarms.

10. A system for controlling a fire and smoke alarm unit, the system comprising:
one or more sensors (106) associated with the alarm unit (100A) installed in an area of interest (AOI), wherein the one or more sensors (106) comprises one or more of a smoke detector, and a fire detector; and
a system for controlling one or more sensors (106) according to any of claims 1 to 8, wherein the one or more mobile computing devices (102) are in communication with the one or more sensors (106) associated with the alarm unit (100A), and the database (108) stores geo-locations of the one or more sensors (106) associated with the alarm unit.

11. A method for controlling one or more sensors (106), the method comprising the steps of:
storing, in a database (108), geo-locations of the one or more sensors (106) installed in an area of interest (AOI);
allowing, by a mobile computing device (102), selection of at least one of the sensors (106) among the one or more sensors to be operated in a hush mode or a testing mode;
retrieving, by the mobile computing device (102), the geo-location of the selected sensors from the database (108);
determining, by the mobile computing device (102), a distance between the selected sensors (106) and the corresponding mobile computing device, based on the retrieved geo-location of the selected sensors;
detecting, by the mobile computing device (102), if the determined distance is within a threshold distance; and
in response to a positive detection, issuing, by the mobile computing device (102), a control signal to the selected sensors (106) and operate the selected sensors in the hush mode or the testing mode.

12. The method of claim 11, wherein in response to a negative detection or non-detection, the method comprises the steps of:
disabling operation of the selected sensors (106) in the hush mode or the testing mode;
generating, by the mobile computing device (102), an alert signal indicative of a request to move the corresponding mobile computing devices near the selected sensors; and
monitoring, by the mobile computing device (102), the distance between the selected sensors (106) and the corresponding mobile computing devices at a predefined interval.

13. The method of claim 11 or 12, wherein during a commissioning stage of the one or more sensors (106) at the AOI, the method comprises the steps of defining and storing a geo-location of the mobile computing device (102) in proximity to or used for commissioning the one or more sensors as the geo-location of the corresponding sensors (106).

14. The method of any of claims 11, 12 or 13, wherein the database (108) is associated with a server (110) that is in communication with the mobile computing device (102), wherein during a commissioning stage of the one or more sensors (106) at the AOI, the method comprises the steps of:
receiving, by the mobile computing device (102), details pertaining to the geo-locations of the one or more sensors (106); and
storing, by the mobile computing device (102), the received details in the database (108) of the server (110).

15. The method of any of claims 11, 12 or 13, wherein the database (108) is associated with the mobile computing device (102), wherein during a commissioning stage of the one or more sensors (106) at the AOI, the method comprises the steps of receiving and storing, by the mobile computing device (102), details pertaining to the geo-locations of the one or more sensors (106) in the database (108).
